Europäisches Patentamt

**European Patent Office**

**Office européen des brevets**

(19)

(11) Publication number. **0 070 694**
A1

(12) # EUROPEAN PATENT APPLICATION

(21) Application number: **82303720.5**

(51) Int. Cl.³: **B 65 G  49/02,** C 25 D  17/00

(22) Date of filing: **15.07.82**

(30) Priority: **16.07.81  GB 8121896**
**10.02.82  GB 8203797**

(71) Applicant: **KIRKBY PROCESS & EQUIPMENT LIMITED, Abercrombie Road Briton Wood Estate Kirkby, Liverpool L33 7YN Merseyside (GB)**

(43) Date of publication of application: **26.01.83**
**Bulletin 83/4**

(72) Inventor: **Miles, John Joseph, 56 Pilch Lane East, Huyton Liverpool, L36 4NP Merseyside (GB)**

(84) Designated Contracting States: **AT BE CH DE FR IT LI NL**

(74) Representative: **Jones, Colin et al, W.P. THOMPSON & CO. Coopers Building Church Street, Liverpool L1 3AB (GB)**

(54) **Conveyor apparatus for use in electro-plating and an electro-plating machine.**

(57)  Conveyor apparatus for handling loose parts to enable operations to be performed thereon. In particular to enable the parts to be selectively plated.

In order to achieve that the invention provides a rotatable carrier wheel 3 and an endless band 5 the band contacts at least a portion of the periphery of the wheel and the parts are held in contact with the carrier wheel by the endless band. The parts are presented to the carrier wheel by feed and guide apparatus and, once gripped, are conveyed on an arcuate path when operations may be performed on the parts.

In one embodiment the carrier wheel is metallic and has a plurality of axial grooves in its periphery and forms part of an electro-plating machine.

-1-

DESCRIPTION.

"CONVEYOR APPARATUS FOR USE IN ELECTRO-PLATING AND
AN ELECTRO-PLATING MACHINE".

The present invention relates to conveyor apparatus for electro-plating machines and in particular for selective plating machines arranged to operate on a continuous basis.

It is frequently required to electro-plate only part of a component, leaving the rest uncoated. For example, in the case of pins and sockets for use in connectors only the actual region where the contact is made needs to be plated. Typically, these pins are to be gold plated and considerable cost savings may be made by only plating a selected part of the pin. Indeed, the accuracy of plating the selected part can itself give rise to considerable savings when large quantities of components have to be plated.

The selective plating of loose parts, i.e. individual articles, which may be of small size, presents additional difficulties. Firstly, the articles have to be loaded into the machine so that they are accurately positioned in order that only the selected region of the part is plated. Secondly, for successful coating it is necessary to ensure that electrical contact is made with each of the articles.

A known continuous plating machine is described in British Patent specification No. 1,188,206 and equivalent U.S. Patent Specification No. 3,657,097 and comprises a series of plating baths disposed in a straight line one after the other and an endless chain conveyor located above the baths. The articles to be plated are mounted in a jig which is suspended from the chain conveyor and that portion to be plated is in contact with electrolyte in the baths. Electrical contact is made by way of the jig which contacts a cathode rail.

-2-

Each article may be manually introduced into location holes in the jig or alternatively a number of the articles may be assembled into a bandolier which is then suspended from the conveyor or placed in the jig. A typical bandolier for small articles such as pins comprises a thin strip of metal having clip portions which are bent around the articles to hold them and to make electrical contact.

Problems have been experienced with the plating of loose parts in ensuring accurate positioning in the plating bath and ensuring good electrical contact with the parts.

It is one object of the present invention to provide an electro-plating machine, in which the articles to be plated are easily and accurately located so ensuring accurate plating of the selected portion.

It is another object to provide an electro-plating machine in which electrical contact of the articles to be plated is more readily assured.

It is a further object to provide an electro-plating machine which provides accurate location and good electrical contact for loose parts or for parts mounted in a bandolier.

It is a still further object to provide an electro-plating machine in which loose parts are loaded automatically and accurately positioned.

According to the broadest aspect of the invention there is provided conveyor apparatus for articles, comprising a rotatable carrier wheel and an endless band which passes around at least part of the circumference of the carrier wheel and by means of which the articles are held in contact with the carrier wheel.

According to another aspect of the invention there is provided conveyor apparatus for an electro-plating machine comprising a rotatable carrier and an endless band which passes around at least part of the circum-
ference of the carrier to hold articles for plating in
electrical contact with the carrier.

Conveniently the rotatable carrier is a one-piece
metallic wheel whose circumference has a plurality of
equi-spaced notches for receiving the articles. The
notches may be semi-circular or V-shaped and extend the
axial depth of the wheel. The band passes around
pulleys, one of which is driven, whereby contact of the
band with the carrier wheel causes rotation of the
carrier wheel.

The apparatus according to the invention has the
advantage that the shape of the parts to be plated is
not, of itself, essential to ensure correct location
of the parts on the carrier. For example, parts devoid
of any flanges may be accommodated in the apparatus
since the tension in the flexible band serves to grip
the parts and hold them in contact with the carrier.

In one embodiment the articles to be held pass
along a radially disposed stationary channel under the
influence of a vibratory feed device. Each article in
turn contacts the carrier and is picked up and carried
along by one of the notches passing the feed device.

A guide disposed immediately adjacent the feed
device maintains the articles in contact with the carrier
and in the correct axial location until the articles
are in a position to be contacted and thereby gripped
by the band. The guide has a shoulder with which the
articles engage prior to being held by the band and this
shoulder ensures that successive articles are all
correctly positioned axially with respect to the carrier
wheel.

The band is in the form of a belt made of rubber,
PVC or other flexible plastic.

Where the articles to be plated are pins which require external plating, the parts project downwardly from the carrier so that the areas to be plated can pass through a series of tanks which include cleaning, rinsing, plating and recovery tanks. In the case of sockets which are plated internally, the outer parts are shielded by a peripheral mask fitted to the carrier wheel and by an extension of the belt.

According to a particular aspect of the invention there is provided an electro-plating machine comprising a rotatable cathode wheel, an endless band passing around a part of the circumference of the cathode wheel to hold articles to be plated in electrical contact with the cathode wheel, and processing tanks disposed below the cathode wheel and concentric therewith, for selective plating of the articles.

Conveniently, the processing tanks may be raised or lowered with respect to the cathode wheel to vary the depth of plating. In the preferred embodiment drive to the cathode wheel is by any of the outer surfaces of the band, the band being driven from a drive pulley.

One embodiment of the invention will now be described further hereinbelow, by way of example only, with reference to the accompanying drawings, in which:-

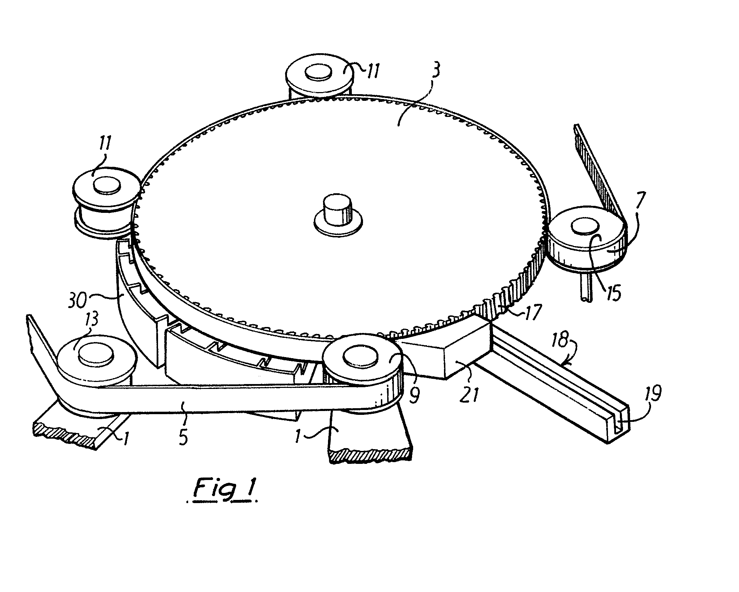

Fig. 1 is a perspective view showing diagrammatically a plating machine incorporating conveyor apparatus according to the invention;

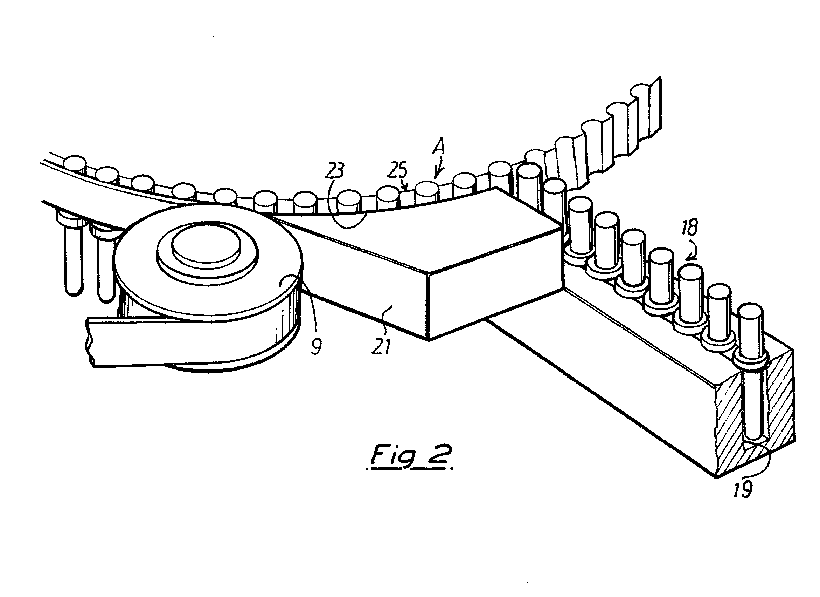

Fig. 2 is a perspective view illustrating in greater detail the feed device shown in Fig. 1;

Fig. 3 is a perspective view of the feed device and guide plate looking in the direction of arrow A with the carrier wheel removed;

Fig. 4 is a sectional view showing a pin held by the belt; and

Fig. 5 is a sectional view of a modified embodiment for internal plating.

Referring to the drawings there is illustrated an

electro-plating machine for the selective plating of loose parts such as pins or sockets for use in connectors. The electro-plating machine has a frame 1 in which is mounted a carrier wheel 3 journalled for rotation about a central axis. An endless belt 5 of rubber, PVC or other flexible plastics extends around a major portion of the circumference of the carrier wheel and passes around end pulley wheels 7, 9 such that the outer surface of the belt contacts the carrier wheel. One or more flanged locating pulleys 11 are disposed around the periphery of the carrier wheel intermediate the end pulleys 7,9 and serve to maintain the axial location of the belt 5 with respect to the carrier wheel 3. Tensioning and idler pulleys 13 are provided to guide the return side of the belt 5. The pulleys 7,9,11 and 13 are flanged so that the belt is located axially. The end pulley 7 is mounted on a drive shaft 15 journalled in the frame and is driven by an electric motor. The speed of rotation may be varied. Tension in the belt causes the carrier wheel to be rotated when the pulley 7 is being driven.

In the described embodiment a plurality of equi-spaced semi-circular notches 17 are formed in the periphery of the carrier wheel 3. These extend the axial depth of the carrier wheel. Alternatively the notches may be V-shaped so as to accommodate different sizes of article. A feed device 18 is disposed in that portion of the circumference which is not engaged by the belt. The feed device comprises a longitudinal channel 19 which is disposed radially with respect to the axis of the carrier wheel and which is stationarily mounted in the frame. The channel has a width dimensioned to freely receive the articles to be plated, in this instance pins for connectors. The particular pins have a flange which rests on the upper surface of the channel and accordingly this determines the axial position of the pins with respect to the carrier wheel. The pins are fed to the channel 19 from a vibratory bowl feeder, not illustrated, which incorporates an orientating device so that only correctly orientated pins pass down the channel 19. The pins are caused to move along the channel 19 under the influence of the driving force generated by the vibrating bowl feeder with or without compressed-air assistance. Alternatively, the channel itself may be vibrated to aid displacement of the pins towards the carrier wheel.

A pin at the end of the channel contacts the outer circumference of the carrier and is received in one of the notches in the outer circumference causing that pin to move with the carrier wheel.

Disposed between the feed device and the end pulley 9 is a guide plate 21. The plate 21 has a face 23 which is spaced slightly from the circumference of the carrier wheel to define a passageway 25 along with the pin passes. The plate 21 also has a shoulder 27 which is disposed axially below the carrier wheel 3 and on which the flange of the pin rests. This shoulder corresponds in height with the upper surface of the channel 19 although it will be appreciated that the shoulder could be inclined so as to displace the pins into the correct axial position if this had not been achieved by the feed device. The face 23 serves to prevent the pins from falling out of the notches.

Alternatively, the parts to be plated may be supported by their end face by approximately positioned surfaces of the feed device and guide device. For example, such an arrangement is particularly advantageous when the parts to be plated do not have a flange on which they can be supported. Thus the parts may be supported by the bottom surface of the channel 19 and the shoulder 27 of the feed device may be aligned with this bottom surface rather than with the upper surface, as described with reference to the illustrated embodiment.

The belt 5 first contacts the carrier wheel 3 adjacent the end of the guide plate 21 so that on emerging from the passageway the pins are contacted by the outer periphery of the belt and urged into contact with the carrier wheel 3. The shoulder 27 extends just past the point at which the belt contacts the pins and this ensures that the axial position of the pins is maintained.

Thus it will be seen that loose parts are automatically fed to the carrier wheel where they are picked up by the notches in the wheel and held in contact with the wheel by the belt which is under tension. The pins in the held position project downwardly from the carrier wheel so that they can be passed into plating baths 30.

These baths are disposed co-axially with the carrier wheel so that the path traced by the pin passes through the successive baths disposed on the same pitch circle diameter. For example, a typical sequence might be:- electrolytic cleaning, rinsing, acid dip, rinse, gold plate, drag out, rinse and hot air dry. The parts are unloaded after the air drying step and this coincides with the end region of the belt. Thus, as the belt leaves contact with the carrier wheel the parts fall away into a collection bin.

With the parts positioned accurately with respect to the carrier wheel 3, this can be used as a datum and the amount or depth of the part which is plated can be controlled. Indeed, the depth of plating may be readily varied by raising or lowering the process tanks.

The process tanks or baths utilise slotted weirs through which the parts pass. Liquids are pumped from reservoirs below into the process tanks where they overflow through the slotted weirs and levelling gates

at the sides of the tanks to return to the respective reservoir underneath. The arrangement corresponds substantially with that described in British Patent Specification No. 1,188,206.

Plating is carried out in the process tanks by d.c. current supplied between anodes placed in the process tanks, and the articles to be plated which are made cathodic by intimate contact with the carrier wheel, which is connected to the negative output of a suitable rectifier. Thus it will be seen that the belt serves to ensure good electrical contact between the pins and the carrier wheel.

When it is required to plate socket which ideally only have to be plated internally, a profiled plastic mask can be fitted to the carrier wheel and the belt extended so that the outer surface of the article is protected.

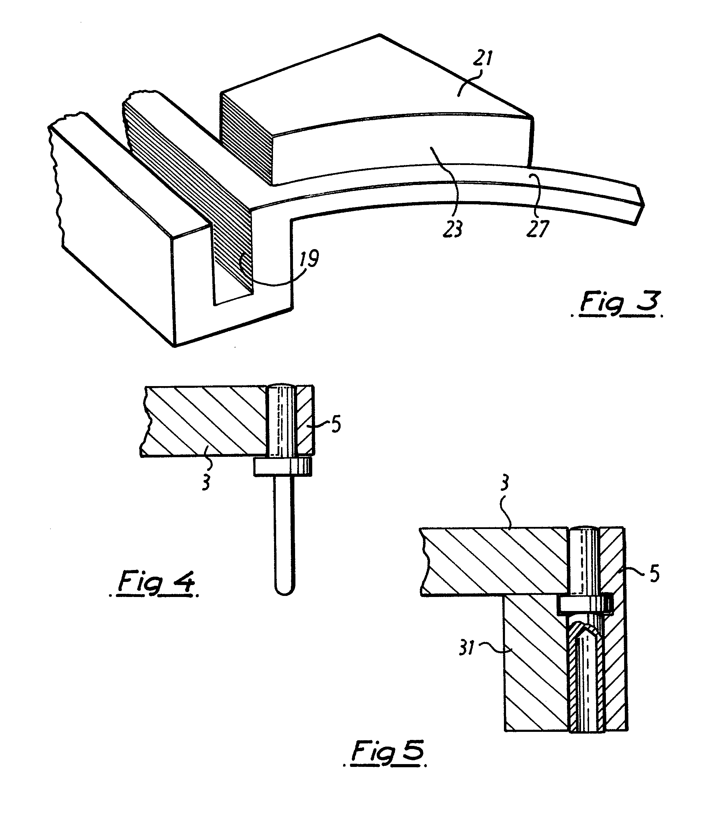

Fig. 4 illustrates one possible embodiment for use in plating sockets. An annular mask 31 is fitted to the carrier wheel 3 so as to project below the carrier wheel. The mask 31 has grooves which are moulded or machine to correspond in shape to one half of the outer shape of the sockets and the belt is extended axially and also forms grooves which correspond in shape to the other half of the socket whereby only the interior and the end of the socket is in contact with the electrolyte.

The machine described heretofore is particularly suited to the automatic loading positioning and selective plating of loose parts, but the same machine may equally be used for plating parts assembled in a bandolier, preformed strip, plain strip, and are or spot or strip plating with suitable peripheral masks and belts. This may be achieved with only simple modification of the above described machine. In essence, where the parts are already assembled in bandoliers the removal of the particular feed apparatus described above would be the minimum requirement. The components in the bandoliers could then be introduced between the carrier wheel and the belt at the free end. Advantageously, a guide should be provided at the point of feeding to ensure accurate axial positioning of the components. This may be achieved by a shoulder engaging the pins or by providing a stop on the bandolier which engages with the carrier wheel. It may be preferable to replace the notched carrier wheel with one having a plain outer circumference.

It will be seen that the machine may easily be adapted to accept preformed strip in reel-to-reel fashion, where unplated strip is fed straight from a reel into the plater and loaded onto a reel at the end of the plating at the unloading section.

Whilst the conveyor apparatus of the invention has been described with reference to use in a plating machine for which it is particularly suited, it will be appreciated that it is equally suited to conveying any loose parts which have to have operations performed on them or which have to be transferred from one point to another and which have to be separated during transit.

In a modification, the interior of the belt may contact the circumference of the carrier wheel rather than the outer surface as described above.

The carrier wheel is preferably a one piece stainless steel disc, although to ensure the electrical connection only the outher rim need be metallic. Thus a composite carrier wheel may be employed.

## CLAIMS

1. Conveyor apparatus for articles characterised by a rotatable carrier wheel and an endless band which passes around at least part of the periphery of the carrier wheel and by means of which the articles are held in contact with the carrier wheel.

2. Conveyor apparatus as claimed in claim 1 characterised in that the periphery of the carrier wheel is provided with a plurality of equi-spaced axially directed grooves for receiving the articles.

3. Conveyor apparatus as claimed in claim 2 characterised in that the grooves are semi-circular or V-shaped.

4. Conveyor apparatus as claimed in claims 1, 2 or 3 characterised in that the endless band is a flexible belt.

5. Conveyor apparatus as claimed in any preceding claim characterised in that the endless band passes around pulleys at least some of which are flanged pulleys and serve to locate the band in an axial direction and in contact with the carrier wheel.

6. Conveyor apparatus as claimed in any of the preceding claims characterised in that the articles are brought into contact with the carrier wheel by means of feed and guide apparatus.

7. Conveyor apparatus as claimed in claim 6 when dependent on any of claims 2 to 5 characterised in that the feed apparatus comprises a longitudinally extending channel disposed on a radial line passing through the central axis of the carrier wheel, which channel terminates at the wheel periphery and the guide apparatus is disposed between the feed device and the point at which the band contacts the carrier, and comprises a guide face and a guide shoulder and in that the guide shoulder determines the axial position of the articles with respect to the carrier wheel and the face serves to retain the articles in the grooves up to the point at which the articles are gripped by the band.

8. Conveyor apparatus as claimed in any preceding claim characterised in that the outer peripheral surface of the band faces the external periphery of the carrier wheel.

9. Conveyor apparatus as claimed in any of claims 1 to 7 characterised in that the inner peripheral surface of the band contacts the articles and hence faces the carrier wheel.

10. Conveyor apparatus as claimed in any preceding claims characterised in that the endless band is driven from a drive pulley and the band rotates the carrier wheel.

11. Conveyor apparatus as claimed in any preceding claim characterised in that the carrier wheel is metallic or at least that part which is in contact with the articles is metallic.

12. An electro-plating machine for electro-plating loose parts characterised by conveyor apparatus as claimed in any preceding claim and plating tanks arranged coaxially with respect to the carrier wheel, the path traced by the articles as the carrier wheel rotates being such that the parts pass through the plating tanks.

13. An electro-plating machine as claimed in claim 12 characterised in that the plating tanks are adjustable in height in the axial direction relative to the carrier wheel.

14. An electro-plating machine as claimed in claim 12 or 13 characterised in that the parts are in electrical contact with the carrier wheel.

15. An electro-plating machine as claimed in claims 12, 13, or 14 characterised in that the parts are socket parts which have to be plated internally and the external surface of the part or at least a substantial part of the external surface below the level of the plating liquid is masked.

16. An electro-plating machine as claimed in claim 15 characterised in that the part is masked by an inner peripheral profiled mask projecting from the carrier wheel and an outer peripheral profiled mask forming an axially directed extension of the endless band.

*Fig_1*

Fig 2.

23 25 A 18 19 9 21

2/3

00706694

Fig 3

Fig 4.

Fig 5.

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>US - A - 4 036 725</u> (ALLEN)<br><br>-- | | B 65 G 49/02<br>C 25 D 17/00 |
| A | <u>US - A - 3 951 772</u> (BICK)<br><br>-- | | |
| D,A | <u>US - A - 3 657 097</u> (BALDOCK)<br>& GB-A-1 188 206 (KIRKBY)<br><br>---- | | |

TECHNICAL FIELDS SEARCHED (Int.Cl. ³)

B 65 G 29/00
B 65 G 47/00
B 65 G 49/00
C 25 D 1/00
C 25 D 5/00
C 25 D 17/00
C 25 D 19/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| X | Place of search | Date of completion of the search | Examiner |
| | VIENNA | 22-10-1982 | PISSENBERGER |

EPO Form 1503.1 06.78